Europäisches Patentamt

European Patent Office

Office européen des brevets

(19)

(11) Numero de publication: **0 221 819**

**A2**

(12)

# DEMANDE DE BREVET EUROPEEN

(21) Numéro de dépôt: **86402405.4**

(22) Date de dépôt: **28.10.86**

(51) Int. Cl.⁴: **F 16 G 3/06**

(30) Priorité: **30.10.85 FR 8516102**

(43) Date de publication de la demande:
**13.05.87 Bulletin 87/20**

(84) Etats contractants désignés:
**AT BE CH DE FR GB IT LI LU NL**

(71) Demandeur: **Caoutchouc Manufacturé et Plastiques Sociéte Anonyme dite:**
**143, rue Yves-le-Coz B.P. 554**
**F-78005 Versailles Cedex(FR)**

(72) Inventeur **Jaubert, Claude**
**18, rue de la Meulonnière**
**F-92500 Rueil Malmaison(FR)**

(54) **Dispositif d'agrafage pour la jonction des courroies, procédé de jonctionnement utilisant ce dispositif et courroie junctionnée selon ce procédé.**

(57) Dispositif d'agrafage pour la jonction de courroies comportant des éléments de renforcement en textile synthétique ou en cables métalliques, caractérisé en ce qu'il est consitituè de:

deux plaques latérales (1), comportant dans leur zone inférieure (4) des fers de retenue (5),

deux plaques intermédiaires (2) comportant à leur partie supérieure une zone d'extrèmité de forme arrondie (6) et à leur partie inférieure une zone d'extrémité (7), en forme d'arc de cercle et une butée (8) qui, en fonctionnement, viendra au contact des fers de retenue (5), et

d'une plaque centrale (3), comportant à sa base une zone (9), en forme de triangle curviligne, l'ensemble de ces plaques et de la courroie étant maintenu par des boulons traversants, le dispositif agissant selon le principe d'un serre-cable.

Application aux sangles et courroies et, plus particulièrement aux courroies transporteuses pour élévatrices.

FIG. 4a

EP 0 221 819 A2

L'invention concerne les courroies ou les sangles, et, plus particulièrement, les courroies transporteuses élévatrices. Elle est relative à une méthode et à un dispositif de jonction des extrémités de courroies, soit pour en accroître la longueur, soit pour réaliser une mise en sans fin par bouclage de la courroie sur elle-même, qui s'avère fiable en cours de fonctionnement.

Le dispositif d'agrafage ainsi que le procédé seront décrits ci-après, à titre d'exemple, dans l'application à une courroie pour élévateur, étant entendu qu'ils ne sont pas limités à cet emploi.

Une méthode classique de jonction des extrémités de courroies consiste en un jonctionnement à chaud, après avoir procédé à une imbrication des extrémités du matériau de renforcement.

Diverses formes de ces techniques de jonctionnement à chaud sont décrites dans de nombreux brevets tels que DE 1165354 de Franz Clouth Rheinische Gummiwarenfabric, FR74.03141 et DE 907996 de Continental Gummi-Werke, FR 1395634, FR 1582190 et FR 1440605 de Pneumatiques, Caoutchouc Manufacturé et Plastiques Kléber Colombes, US 173686 de Goodyear Tire and Rubber.

Une méthode est préconisée dans la norme allemande DIN 22131. Une autre méthode est décrite, par M.Gozdiff de Goodyear dans une conférence intitulée "Factors relating to vulcanized splice reliability for steel cable reinforced conveyor belting", présentée au 125ème meeting of the Rubber Division, American Chemical Society, à Indianapolis du 8 au 11 mai 1984.

Enfin, un article de H.P.Lachmann intitulé "A survey of present-day conveyor belt technology", publié dans "Bulk solids handling", volume 4, numéro 4, de décembre 1984 fait le point des différentes technologies utilisables.

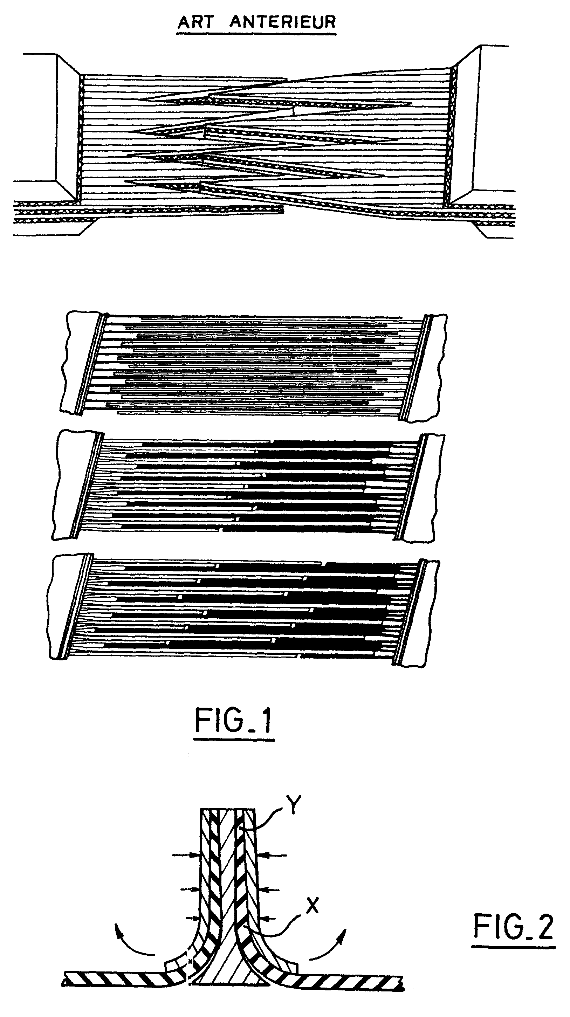

Des exemples sont illustrés sur la figure 1, relative à l'art antérieur dans le jonctionnement à chaud.

Il existe cependant, des conditions qui rendent inapplicables les techniques de jonctionnement à chaud : par exemple. la longueur d'une telle jonction peut être incompatible avec la place disponible dans la gaine ou à côté de l'élévateur. ou encore. la résistance mécanique peut devenir insuffisante pour garantir un fonctionnement sans incident de l'élévateur. si la température des produits transportés ou celle des gaz qui circulent dans la gaine est supérieure à 100 °C.

En effet. dans le cas d'une imbrication des cables métalliques. la liaison entre les deux extrémités de courroie(s) est assurée par le mélange de caoutchouc séparant les extrémités des cables. Or. il est connu que lorsque la température croît. les propriétés mécaniques des mélanges à base d'élastomères diminuent et il en est de même des forces de liaison entre le caoutchouc et le métal : en conséquence. la résistance à la traction d'une telle jonction décroit lorsque la température s'élève.

Compte tenu des risques encourus avec une jonction par collage à chaud et imbrication des cables métalliques. les techniciens de la manutention ont proposé de remplacer la liaison par collage par une liaison mécanique visant à serrer l'une contre l'autre les deux extrémités de courroie(s).

Ces techniques sont désignées par le terme "d'agrafage" et sont décrites. par exemple. dans le brevet FR 1320222 de Pneumatiques. Caoutchouc Manufacturé et Plastiques Kléber Colombes ou dans les publicités des sociétés spécialisées telles que Goro ou Flexco.

L'effort de compression est assuré par des joues métalliques que traversent des boulons de serrage. Le principe appliqué dans la jonction des extrémités de courroie(s) par voie mécanique est théoriquement plus satisfaisant que le fonctionnement par collage à chaud mais l'analyse des phénomènes qui accompagnent la mise en service de ce type de dispositifs démontre que la sécurité de fonctionnement n'est que peu améliorée. En effet. sous l'effort de traction exercé sur les deux extrémités de la courroie. les plaques latérales ont tendance à s'écarter l'une de l'autre.

Pour remédier à ce défaut, on utilise, généralement, deux lignes de boulons pour assurer le serrage des plaques, la ligne de boulons placée le plus près de la zone de tension étant destinée à limiter le déplacement des plaques.

La figure 2, relative à l'art antérieur dans la technique d'agrafage, permet d'expliquer les modifications qui interviennent, en fonctionnement, au niveau de la répartition de la pression sur les extrémités de la courroie.

Lors du serrage initial de l'agrafe, la pression est répartie uniformément sur l'ensemble des deux extrémités serrées. A la mise en service, il se produit un déplacement des pièces latérales qui tend à diminuer la pression dans la zone X et à l'augmenter dans la zone Y. Sous l'effet de l'accroissement de pression, le mélange de caoutchouc qui se trouve dans la zone Y a tendance à être chassé et flue c'est-à-dire qu'il y a déplacement du caoutchouc des zones les plus comprimées vers les zones les moins comprimées. Ce fluage a pour effet de favoriser encore le rapprochement des plaques de serrage dans la zone Y, ce qui accentue le phénomène.

A l'appui de cette analyse, on constate couramment que la seconde ligne de boulons est totalement desserrée ce qui prouve que l'effort de pression exercé sur les extrémités de courroie(s) n'est pas dû aux boulons mais à un mouvement de rotation des plaques de serrage. Comme dans la zone X, l'effort de serrage a notablement baissé, la tenue d'une telle agrafe n'est due qu'à la retenue des cables métalliques dans la zone Y et aux forces de frottement existant dans la zone X entre la courroie et chacune des plaques de serrage. Après desserrage de la zone Y, l'examen des extrémités de courroie(s) dans ladite zone montre que l'effort de tension est tel qu'il y a destruction locale du mélange caoutchouc et de la liaison entre le caoutchouc et les cables métalliques. De ce fait, la tenue d'une telle agrafe devient très problématique surtout lorsque vient s'ajouter à cet effet mécanique celui de la température . Il est, en effet, bien connu que l'augmentation de température accélère et facilite le fluage des mélanges à base d'élastomères et diminue la force de la liaison entre lesdits mélanges et

les cables d'acier.

Pour pallier ce défaut, on peut essayer de renforcer la pression exercée par les plaques latérales par un blocage des extrémités des cables métalliques.

Le brevet DE 2341992 de Bernhard Beumer Maschinenfabrik décrit une telle solution, dans laquelle chaque cable métallique est dénudé à son extrémité de son enrobage de caoutchouc et ladite extrémité est insérée dans un dispositif de serrage par vis. Une telle technique, longue et délicate à mettre en oeuvre, présente, en outre, un risque du fait de la conception de la zone de serrage du cable. En effet, si la pression de serrage n'est pas contrôlée, il existe un risque certain de couper le cable, ce qui réduirait à néant l'effet escompté. De plus, sous l'effet des vibrations et de la température, les vis ont tendance à se desserrer et nécessitent donc une surveillance constante.

Une solution différente, utilisée notamment pour assurer le blocage des cables de prétension des structures précontraintes, consiste à dénuder les extrémités des cables métalliques, à détoronner, c'est à dire à détruire l'enroulement des brins constitutifs, pour en épanouir l'extrémité et à couler, autour, un métal à bas point de fusion. Cette technique présente une grande fiabilité lorsqu'elle est utilisable; en effet, la coulée du métal en fusion nécessite la mise en position verticale de l'agrafe, ce qui implique, soit que l'on puisse déplacer l'un des tambours de l'élévateur -ce qui n'est pas toujours possible- soit que l'on puisse placer l'agrafe au sommet de l'élévateur, mais la coulée d'un métal en fusion, sur des extrémités de cables métalliques, à une hauteur de plusieurs dizaines de mètres est alors délicate, voire dangereuse. En outre, un tel dispositif est pratiquement indémontable ce qui ne facilite pas les opérations d'entretien de l'élévateur ou de remplacemnet de la courroie.

L'invention a donc pour objet un dispositif d'agrafage pour la jonction de courroie(s) et, plus particulièrement, de courroies comportant des éléments de renforcement en textiles synthétiques ou en cables métalliques.

L'invention a également pour objet le procédé de réalisation de jonctions utilisant le dispositif décrit et l'application à une courroie transporteuse pour élévateur à godets.

Le dispositif d'agrafage objet de l'invention permet de réaliser, par une méthode aussi simple que les jonctionnements conventionnels et en toute sécurité, puisque sans manipulation de produits chauds ou de colles ni d'équipement de chauffage, une jonction entre deux extrémités voisines de deux courroies pour obtenir une courroie plus longue ou entre les deux extrémités d'une même courroie pour obtenir un article "sans fin" prêt à fonctionner sur un convoyeur ou un élévateur.

Le dispositif, qui ne nécessite qu'une préparation simplifiée des extrémités de courroie(s) à assembler, agit selon le principe d'un serre-cable, d'une part, par blocage des extrémités par l'intermédiaire d'une boucle réalisée autour de la partie supérieure, arrondie, de la plaque intermédiaire du dispositif d'agrafage, d'autre part, par un simple serrage mécanique des éléments de renforcement de la courroie sur la plus grande longueur possible et dans une zone où lesdits éléments de renforcement sont dépourvus de caoutchouc afin de limiter les risques de fluage et les effets de la tension et de la température.

Le dispositif d'agrafage, objet de l'invention comporte, en effet, deux plaques latérales munies de fers de retenue, deux plaques intermédiaires comportant à leur partie supérieure une zone pour l'enroulage, sans pliage ni blessure de la courroie, afin de former une boucle et dont la partie inférieure, en forme d'arc de cercle pour faciliter l'enroulement de la courroie sous tension, comporte une butée sur laquelle le fer de retenue viendra prendre appui, en cours de fonctionnement, et une plaque centrale. Ce dispositif agit par simple serrage mécanique de la courroie au moyen de ces différentes pièces constitutives du dispositif d'agrafage grâce à des boulons traversants.

Les caractéristiques et variantes de l'invention seront mieux comprises à la lecture de la description ci-après et en se référant aux dessins dans lesquels, après les figures 1 et 2 illustrant l'art antérieur,

- la figure 3 schématise le dispositif d'agrafage utilisé pour la réalisation de la jonction ou de la mise en sans fin de courroie(s).

- la figure 4 illustre le procédé de jonctionnement utilisant ledit dispositif d'agrafage.

- la figure 5 montre une disposition particulière permettant d'améliorer la qualité de la jonction.

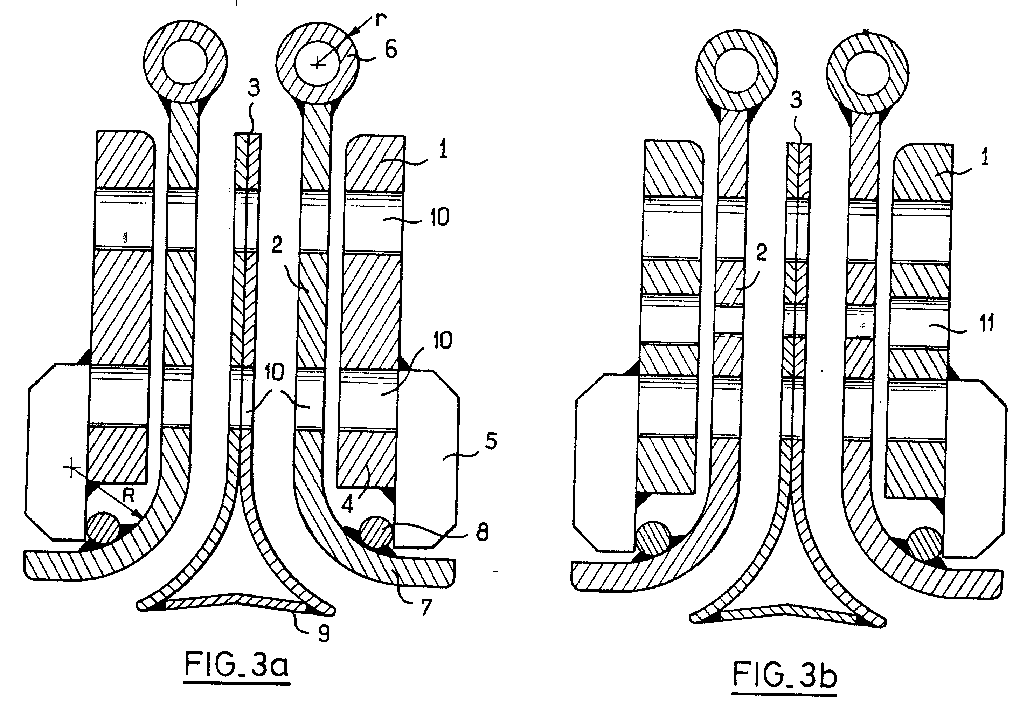

La figure 3 montre que le dispositif d'agrafage est constitué des éléments suivants :
                2 plaques latérales (1)
                2 plaques intermédiaires (2)
                1 plaque centrale (3)

Les plaques latérales (1) comportent, de place en place, à leur extrémité inférieure (4) des fers de retenue (5) du cintrage. Les plaques intermédiaires (2) comportent deux zones d'extrémité (6) et (7) de formes fonctionnelles. Afin que les extrémités de courroie(s) à assembler puissent s'enrouler sans contraintes excessives autour des zones d'extrémité (6). lesdites zones d'extrémités doivent posséder un rayon de courbure suffisant.

La valeur minimale dudit rayon de courbure n'est pas critique lorsque le dispositif d'agrafage est utilisé avec une courroie à renforcement textile, qui est assez souple, mais, en cas d'utilisation avec une courroie renforcée de cables métalliques, la valeur du rayon de courbure (r) doit être au moins égale à 5 fois le diamètre des cables métalliques.

L'extrémité (7) des plaques intermédiaires (2) a une forme d'arc de cercle pour permettre l'enroulement de la courroie tendue, sans risque de blessure et, sur la face en regard de la plaque latérale (1), ladite extrémité (7) comporte une butée (8), généralement

soudée, sur laquelle viendra en appui, par serrage, le fer de retenue (5).

La plaque centrale (3) comporte, à sa base, une zone (9) dont la section a une forme de triangle curviligne, en soi connue, destinée à séparer les deux extrémités de la courroie et à éviter, grâce à sa base élargie, que ne se produisent des chocs au moment du passage de la jonction sur les rouleaux ou les tambours.

Sur la vue 3a, les plaques latérales (1), intermédiaires (2) et la plaque centrale (3) sont percées de deux rangées de trous (10) pour permettre le passage de boulons traversants destinés au serrage des différents éléments constitutifs du dispositif d'agrafage et de la courroie elle-même.

La vue 3b montre un perfectionnement du dispositif d'agrafage qui comporte, en plus des éléments décrits précédemment, un trou (11) ne présentant pas de fonction de serrage mais destiné à faciliter le montage et le centrage des plaques (1), (2), (3) et de la courroie lors de l'opération d'agrafage.

Le dispositif d'agrafage objet de l'invention offre les avantages suivants par rapport aux systèmes connus :

- réalisation aisée, n'entraînant pas la nécessité de tolérances serrées entre les rayons de pliage des tôles et les perçages.

- diminution du nombre de soudures d'où moindre risque de déformation, moindre durée de fabrication et, par conséquent, moindre coût.

- réduction de poids de dix kilos environ par mètre de longueur, par rapport à une agrafe performante, ce qui permet d'améliorer le bilan énergétique du transporteur.

- montage facilité, dans la version décrite sur la vue 3b, par la présence du trou de centrage et de guidage des éléments du dispositif d'agrafage.

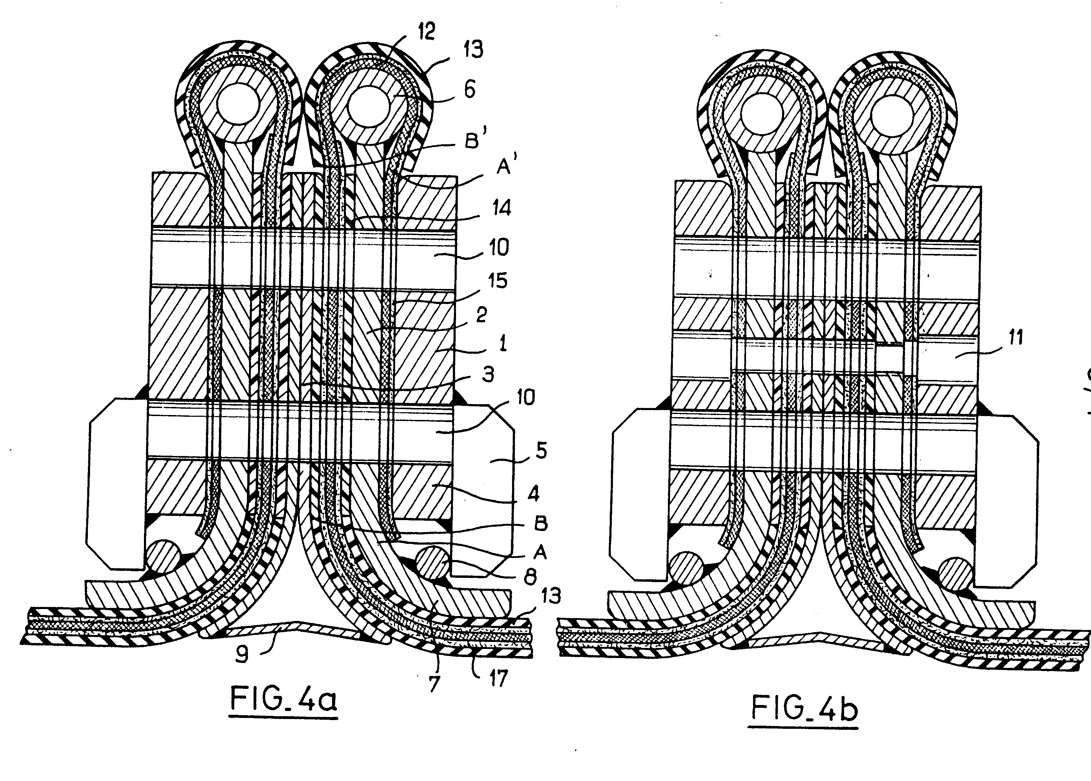

La figure 4 illustre le procédé de jonctionnement de la courroie qui utilise le dispositif d'agrafage objet de l'invention.

La jonction nécessite que les éléments de renforcement (12) soient dénudés de leur revêtement en caoutchouc (13) dans les zones (AA') et (BB') correspondant aux longueurs droites des pièces (1), (2) et (3) du dispositif d'agrafage mais ils peuvent conserver leurs trames textiles ou métalliques (17) si la courroie en comporte, ce qui agit comme protection.

Les longueurs (A'B') correspondant à l'enroulement autour des zones d'extrémité (6) des plaques intermédiaires (2) conservent leur revêtement (13) pour protection. La jonction s'opère par blocage des éléments de renforcement (12), après retournement, en forme de boucle, autour des zones d'extrémité (6) des plaques intermédiaires (2), puis serrage des zones dénudées des éléments de renforcement (AA') et (BB') entre les plaques (1) et (2) d'une part, et (2) et (3) d'autre part, par des boulons traversants (non représentés). Il y a donc suppression, dans les zones de serrage (AA') et (BB') des revêtements en caoutchouc de la courroie afin de limiter au maximum le fluage.

Les fers de retenue (5) des plaques latérales (1) viennent alors en appui sur les butées (8) des plaques intermédiaires (2).

Il est nécessaire de maintenir l'épaisseur constante entre les plaques (1), (2) et (3) du dispositif d'agrafage. Pour ce faire, les parties de revêtements en caoutchouc éliminées sont remplacées par des éléments de calage (14) ayant une épaisseur sensiblement égale à celle du revêtement en caoutchouc (13).

Ce procédé de jonctionnement a pour avantages :

- une équitension des éléments de renforcement (12) (ou répartition égale des forces de tension sur l'ensemble desdits éléments de renforcement), ce qui permet d'obtenir une résistance à la rupture moyenne supérieure à celle obtenue avec les dispositifs d'agrafage classiques.

**0221819**

- une préparation très simple des zones (AA') et (BB') puisqu'elle se limite à des opérations de "décorticage" (c'est-à-dire d'élimination des revêtements en caoutchouc) et de perçage, ne nécessite que peu de temps par rapport aux habituelles opérations de préparation et ne requiert aucune qualification particulière de l'opérateur ou d'utilisation d'outillage compliqué.

- suppression de l'opération de collage des extrémités de courroie(s), donc de l'équipement nécessaire tel que presses à vulcaniser, pièces de moulage ou dispositif de confection.

- réduction des problèmes de maintenance en service, puisque le fluage du caoutchouc dans les zones de serrage devient faible, le serrage définitif s'opère plus rapidement et les resserages peuvent être beaucoup plus espacés.

- augmentation de la fiabilité de la jonction car les variations des constituants dans les parties comprimées sont réduites et la jonction conserve ses qualités initiales au cours du temps et dans des conditions de services difficiles.

Les vues 4a et 4b illustrent les jonctionnements effectués avec les dispositifs d'agrafage représentés, respectivement, sur les vues 3a et 3b.

Une protection dans les zones (AA') et (BB'), contre la corrosion, la pollution par les poussières, les attaques chimiques et l'usure par contact avec les plaques (1), (2) et (3) du dispositif d'agrafage, peut être assurée par enroulement fin d'une feuille de caoutchouc ou de textile.

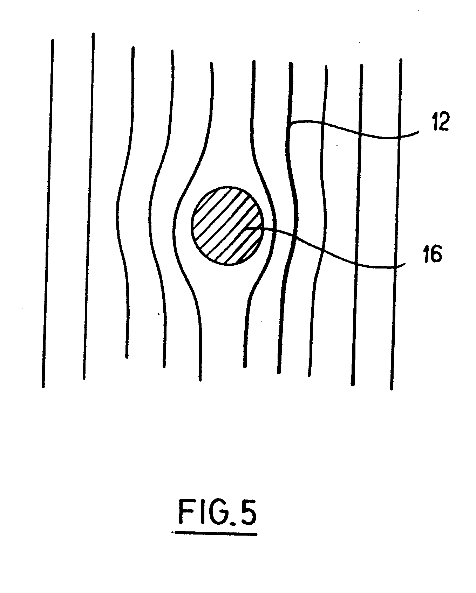

La figure 5 représente un moyen d'accroître l'efficacité de la jonction en limitant le nombre des éléments de renforcement coupés dans la zone de passage des boulons. Pour ce faire, il est possible, lors du montage, de disposer lesdits éléments de renforcement (12) de manière à ce qu'ils soient déviés de leur trajectoire initiale autour de la tige des boulons traversants (16).

Comme il a été dit précedemment, les éléments de renforcement sont
protégés par un revêtement, mais pour accroître encore cette protection, il est possible, de disposer dans la partie supérieure du
dispositif d'agrafage, un capot, le plus souvent réalisé en tôle,
et de compléter l'étanchéité par la pose d'un mastic ou de toute
matière malléable.

Pour illustrer l'efficacité du dispositif de jonction objet de
l'invention, les essais suivants ont été réalisés. Trois courroies
identiques, d'une résistance nominale de 1250 N/mm ont été mises
en sans fin :

1) à l'aide d'une agrafe standard du commerce n'agissant que par
serrage (courroie 1).

2) à l'aide du dispositif d'agrafage objet de l'invention dans
lequel le passage des boulons traversants provoque un certain nombre de coupures des éléments de renforcement (courroie 2).

3) à l'aide du dispositif d'agrafage objet de l'invention et en
utilisant la technique de déviation des éléments de renforcement
schématisée sur la figure 5 (courroie 3).

Les courroies ainsi jonctionnées sont montées sur un banc de mesure de la résistance en traction formé de deux tambours cylindriques à axes parallèles.

Par éloignement progressif des deux tambours, la tension exercée
sur l'anneau constitué de la courroie mise en sans fin augmente
jusqu'à la rupture de la courroie et l'on enregistre la force maximale.

Le "rendement" (R) de la jonction est défini comme le rapport, en
pourcentage, de l'effort maximal enregistré (FM) à la résistance
nominale (Rn) de la courroie, c'est-à-dire la résistance à la
rupture en "plein corps", dans une zone ne comportant pas de
jonction.

Les résultats obtenus sont indiqués dans le tableau ci-après :

| Référence | Type d'agrafage | Rendement |
|-----------|-----------------|-----------|
| Courroie 1 | Agrafe du commerce | 51 % |
| Courroie 2 | Dispositif d'agrafage objet de l'invention | 63 % |
| Courroie 3 | Dispositif d'agrafage objet de l'invention + déviation des éléments de renforcement dans la zone de perçage | 77 % |

Il est ainsi démontré que le système d'agrafage objet de l'invention, qui utilise un blocage avec serrage mécanique, permet de réaliser une jonction des extrémités de courroie(s) dans des conditions simples, voisines de celles des agrafages conventionnels, dans des conditions de sécurité puisqu'il n'y a aucune nécessité de manipuler du métal en fusion, et en rendant la jonction fiable même dans des cas d'utilisation difficiles tels que des températures élevées ou de fortes tensions de service. De plus, une telle jonction présente des avantages sur le plan économique.

L'homme de l'art peut, bien entendu, apporter diverses modifications au dispositif, au procédé et aux applications décrits et illustrés à titre d'exemples non limitatifs, sans sortir du cadre de l'invention.

REVENDICATIONS

1° Dispositif d'agrafage pour la jonction de courroies comportant des éléments de renforcement en textiles synthétiques ou en cables métalliques, caractérisé en ce qu'il est consititué de :
- deux plaques latérales (1), comportant dans leur zone inférieure (4) des fers de retenue (5),
- deux plaques intermédiaires (2) comportant à leur partie supérieure une zone d'extrémité de forme arrondie (6) permettant l'enroulement de la courroie sans pliage ni rupture et à leur partie inférieure une zone d'extrémité (7), en forme d'arc de cercle et une butée (8) qui, en fonctionnement, viendra au contact des fers de retenue (5),
et - d'une plaque centrale (3), comportant à sa base une zone (9), en forme de triangle curviligne, destinée à faciliter le passage de la jonction sur les rouleaux, l'ensemble de ces plaques et de la courroie étant maintenu par des boulons traversants, le dispositif agissant selon le principe d'un serre-cable.

2° Dispositif d'agrafage pour la jonction de courroies selon la revendication 1, caractérisé en ce qu'un trou (11), sans utilité fonctionnelle en service, est percé au voisinage de la partie centrale des plaques latérales (1), intermédiaires (2) et centrale (3), pour faciliter le montage et le centrage des éléments dudit dispositif et de la courroie.

3° Dispositif d'agrafage pour la jonction de courroies selon l'une des revendications 1 ou 2 , caractérisé en ce que, dans le cas de l'utilisation du dispositif avec une courroie renforcée par des cables métalliques, le rayon de courbure r des zones d'extrémité (10) des plaques intermédiaires (2) est égal à au moins cinq fois le diamètre desdits cables métalliques.

4° Dispositif d'agrafage pour la jonction de courroie(s) selon l'une des revendications 1 à 3, caractérisé en ce qu'un capot de protection contre la pollution atmosphérique et les intempéries est disposé à la partie supérieure dudit dispositif et est rendu étanche par l'emploi d'un mastic.

5° Procédé de jonction par agrafage de courroies caractérisé en ce que le serrage mécanique s'opère, après formation de boucles autour des zones d'extrémité (10) des plaques intermédiaires (2) sur des portions des éléments de renforcement (12) dénudés de leur revêtement de caoutchouc, séparées par lesdites plaques intermédiaires (2) et sur une longueur sensiblement égale à la longueur droite de la plaque centrale (3), grâce au dispositif d'agrafage conforme à l'une des revendications 1 à 4.

6° Procédé de jonction par agrafage de courroies selon la revendication 5 caractérisé en ce que les éléments de renforcement (12) au voisinage des boulons de fixation des différentes plaques (1), (2) et (3) du dispositif d'agrafage sont déviés de leur trajectoire initiale pour ne pas être coupés par les boulons traversants.

7° Courroie transporteuse pour élévateur à godets dont la jonction ou la mise en sans fin est réalisée selon l'une des revendications 5 ou 6 et en utilisant le dispositif d'agrafage conforme à l'une des revendications 1 à 4.

ART ANTERIEUR

FIG_1

FIG_2

0221819

FIG_3b

FIG_3a

0221819

FIG.4a

FIG.4b

12

16

## FIG.5